Europäisches Patentamt

European Patent Office

Office européen des brevets

(19)

(11) Veröffentlichungsnummer: **0 252 512 B1**

(12) **EUROPÄISCHE PATENTSCHRIFT**

(45) Veröffentlichungstag der Patentschrift: **29.04.92**

(51) Int. Cl.⁵: **H01R 9/26**, H02B 1/20

(21) Anmeldenummer: **87109954.5**

(22) Anmeldetag: **10.07.87**

(54) **Mehrfach-Steckverbindungseinheit.**

(30) Priorität: **11.07.86 DE 8618540 U**

(43) Veröffentlichungstag der Anmeldung:
**13.01.88 Patentblatt 88/02**

(45) Bekanntmachung des Hinweises auf die
Patenterteilung:
**29.04.92 Patentblatt 92/18**

(84) Benannte Vertragsstaaten:
**AT BE CH DE FR GB IT LI LU NL SE**

(56) Entgegenhaltungen:
EP-A- 0 161 984          BE-A- 677 804
DE-A- 2 736 664          DE-A- 3 417 422
GB-A- 696 340            US-A- 2 666 907

IBM TECHNICAL DISCLOSURE BULLETIN,
Band 28, Nr. 12, Mai 1986, Seiten 5597-5598,
New York, US; "Rotatable power assembly"

(73) Patentinhaber: **Ellenberger & Poensgen GmbH
Industriestrasse 2-8
W-8503 Altdorf(DE)**

(72) Erfinder: **Kinner, Josef
Pfaffenherdstrasse 13
W-8501 Burgthann(DE)**
Erfinder: **Krasser, Fritz
Heisterstrasse 3
W-8503 Altdorf(DE)**

(74) Vertreter: **Tergau, Enno et al
Hefnersplatz 3 Postfach 11 93 47
W-8500 Nürnberg 11(DE)**

EP 0 252 512 B1

## Beschreibung

Die Erfindung betrifft eine Mehrfach-Steckverbindungseinheit mit den im Oberbegriff des Anspruches 1 angegebenen Merkmalen.

Für die Stromversorgung eines oder mehrerer parallelgeschalteter Verbraucher insbesondere in Fernmeldeanlagen sind Mehrfach-Steckverbindungseinheiten bekannt, deren Hauptbauteil aus einer Sockelleiste besteht. Diese ist aus Isolierwerkstoff gefertigt und trägt parallel zueinander angeordnete Sammelschienen für den Phasen-, Neutralund Schutzanschluß mehrerer Verbraucher. Auf die Oberseite dieser Sockelleiste ist für jeweils einen Verbraucher ein Überstromschutzschalter setzbar, über den der Versorgungsstrom von der Phasensammelschiene zu einem Anschlußelement der Sockelleiste für die Phasenverteilerleitung des jeweiligen Verbrauchers geleitet wird. Der Verbraucher selbst ist dadurch gegen Überstrom und Kurzschluß phasenseitig abgesichert.

Die Stromversorgung der Verbraucher erfolgt jeweils über Verteilerleitungen für Phasen-, Neutralund Schutzanschluß. Diese sind mit den jeweiligen Sammelschienen mittels einzelner Steckverbinder elektrisch verbindbar. Diese Verbindung erfolgt beispielsweise durch Aufstecken von einzelnen Anschlußklemmen der Verteilerleitungen auf über die Rückseite der Sockelleiste hinausstehende Steckerstifte der Sockelleiste.

Die Sammelschienen derartiger Sockelleisten werden in der Regel jeweils getrennt über Hauptversorgungsleitungen für Phasen-, Neutral- und Schutzanschluß kontaktiert. Bei größeren Stromversorgungseinheiten - wie Schaltkästen u.dgl. - gestaltet sich bereits der Hauptanschluß der Sockelleisten arbeitsintensiv und konstruktiv aufwendig. Der gleiche Nachteil trifft für die Kontaktierung der einzelnen Verbraucher zu, da diese mit den Anschlußklemmen ihrer Verteilerleitungen einzeln an die rückseitigen Steckerstifte der Sockelleiste angeschlossen werden müssen. Gerade die rückseitige Herausführung dieser Steckerstifte gestaltet die Anschlußarbeit oft sehr umständlich, da die Rückseite der Sockelleiste in der Regel nur schwer zugänglich ist.

Der Hauptnachteil der vorbekannten Steckverbinder liegt auf dem sicherheitstechnischen Gebiet. Es wird bei Sockelleisten nach dem Stand der Technik nicht dafür Sorge getragen, daß alle ihre spannungsführenden Teile völlig abgedeckt nach außen liegen. Die damit verbundene Unfallgefahr für einen Anwender durch Berührung spannungsführender Bauteile ist offensichtlich, vor allem da bei Störungen oft unter Zeitdruck gearbeitet werden muß.

Aus DE-A-34 17 422 ist ein Stromverteilereinsatz für Gestelle in Betriebsstellen der Nachrichtentechnik mit nebeneinander aufreihbaren Sicherungsautomaten bekannt. Im Verteilereinsatz sind nebeneinander Stecksockel befestigt, die an ihrer Unterseite Anschlußvorrichtungen zur Verbindung mit den zuführenden Leitungen tragen. In diesen Stecksockel wird ein Zwischensockel mit seitlich angeordneten Anschlußvorrichtungen eingesteckt. Der Zwischensockel trägt den einsteckbaren Sicherungsautomaten.

Nachteilig bei diesem Stromverteilereinsatz ist die Tatsache, daß die Stecksockel jeweils elektrische Anschlußelemente aufweisen, die einzeln an die zugehörigen Versorgungsleitungen angeschlossen werden müssen. Es sind keine Sammelschienen für Phasen-, Neutral- und Schutzanschluß vorhanden. Für jeden Verbraucher muß ein Stecksockel im Verteilereinsatz befestigt und angeschlossen werden. Zwar erfüllt der angegebene Stromverteilereinsatz sicherheitstechnische Anforderungen bezüglich Berührungssicherheit und der Möglichkeit, Verbraucherleitungen ohne Abschaltung der Hauptstromversorgungsleitungen anzuklemmen. Jedoch sind die Anschlußarbeiten zum Aufbau der Stromversorgungseinheit beispielsweise in einer Fernmeldeanlage nach wie vor aufwendig und zeitintensiv.

In US-A-2 666 907 ist eine leistenartige Stromversorgungseinheit angegeben, bei der berührungssicher abgedeckte Sammelschienen verwendet werden. Beim Gegenstand nach dieser Druckschrift handelt es sich jedoch im wesentlichen nur um eine an einer Wand installierbare Mehrfach-Steckdose, die über eine Verbindungsleitung zu einer Wandsteckdose stromversorgt wird. Beispielsweise sind auch keine Überstromschutzschalter zur Absicherung vorgesehen.

In BE-A-677 804 ist eine Anordnung mit mehreren Sammelschienen für elektrische Geräte angegeben, bei der die Sammelschienen jeweils als gestanzte und gebohrte Blechstreifen ausgebildet sind. Deren Anschlußlappen stehen aber nicht isoliert vom Sammelschienenhalter ab, sie stellen also bei nicht abgeschalteter Stromversorgung ein nicht unerhebliches Sicherheitsrisiko dar.

Ausgehend von den Nachteilen der Sockelleisten nach dem Stande der Technik liegt der Erfindung die Aufgabe zugrunde, eine Mehrfach-Steckverbindungseinheit der eingangs genannten Art zu schaffen, die sicherheitstechnisch umfassend verbessert ist und mit der die Anschlußarbeiten sowohl für die Haupt- als auch die Verbraucheranschlüsse erheblich rationalisiert werden.

Diese Aufgabe wird gemäß den kennzeichnenden Merkmalen des Anspruches 1 gelöst. Durch den Einschluß der Sammelschienen im Gehäuse der Sockelleiste sind diese spannungsführenden Teile abgedeckt. Im Gegensatz zu herkömmlichen Sockelleisten sind die Sammelschienen nunmehr über Stecköffnungen zugänglich. Es ragen also keine unter Spannung stehenden Steckerstifte u.dgl. zu irgendeiner Seite der Sockelleiste heraus. Damit ist eine weitgehende Absicherung gegen Berührung der spannungsführenden Teile gewährleistet.

Der Rationalisierungseffekt ergibt sich durch die Zusammenfassung der Verteilerleitungsanschlüsse für einen jeden Verbraucher in jeweils einen gesonderten Anschlußblock. Vor dem eigentlichen Einsatz der Mehrfach-Steckverbindungseinheit werden also die Verteilerleitungen des Verbrauchers beispielsweise bereits bei dessen Montage anschlußseitig mit dem Anschlußblock verbunden. Dieser Anschlußblock ist ein einfach zu handhabendes Bauteil, das unter direkter Kontaktgabe mit der Neutral- und Schutzsammelschiene entlang der Sockelleiste aneinandergereiht auf diese aufsetzbar ist. Es müssen also nicht mehr wie bisher umständlich mindestens drei einzelne elektrische Verbindungen für den Verbraucher zwischen den Verteilerleitungen und der Sockelleiste angebracht werden.

Ein weiterer Vorteil ist die Tatsache, daß die Anschlußblöcke nur unter direkter Kontaktgabe mit der Neutralund Schutzsammelschiene aufsetzbar sind. Die Verbindung mit der Phasensammelschiene ist in diesem Montagestadium noch unterbrochen, d.h. der Verbraucher liegt nicht unter Spannung. Diese wird erst durch das Aufsetzen eines Überstromschutzschalters für jeweils einen Verbraucher auf das Gehäuse der Sockelleiste durchgeschleift. Dazu verbindet der Überstromschutzschalter durch Kontaktgabe mit der Phasensammelschiene diese mit dem Phasenanschluß des zwischen Sockelleiste usd Überstromschutzschalter eingeschlossenen Anschlußblockes. Erst wenn der Überstromschutzschalter nach der kompletten Montage der Stromversorgungseinheit für einen jeden Verbraucher geschlossen wird, liegen letztere unter Spannung. Ersichtlich ist das Anschließen der Verteilerleitungen und damit Verbraucher mit der erfindungsgemäßen Mehrfach-Steckverbindungseinheit besonders gefahrlos und auf rationelle Weise möglich. Der Erfindungsgegenstand ist gewissermaßen modular aufgebaut, wobei sowohl jedes Modul einzeln, als auch die Steckverbindungseinheit in ihrer Gesamtheit berührungssicher bezüglich der spannungsführenden Teile gestaltet ist. Weiterhin ist der Anschluß eines Verbrauchers so einfach und rationell durchzuführen, weil keine Manipulationen auf der Rückseite der Sockelleiste nötig sind. Anschlußblöcke und Überstromschutzschalter sind auf die Sockelleiste aufsetzbar, d.h. das Heranführen dieser Bauteile erfolgt immer von oben, von der Frontseite der Sockelleisten also.

Die Unteransprüche kennzeichnen vorteilhafte Weiterbildungen des Erfindungsgegenstandes. Durch das Kennzeichen des Anspruches 2 wird eine formschlüssige, besonders stabile Verbindung zwischen jeweils einem Anschlußblock und der Sockelleiste erzielt. Außerdem sind durch die stufenförmigen, gegenseitig formangepaßten Einkehlungen Anlageflächen des Anschlußblockes an die Oberseite der Sockelleiste geschaffen, die rechtwinklig zur Einsteckrichtung liegen. Diese definieren eindeutige Endanschläge für die Einsteckbewegung des Anschlußblockes auf die Sockelleiste.

Durch die Bildung einer im wesentlichen mit einem rechteckförmigen Querschnitt versehenen Montageeinheit der Sockelleiste und der Anschlußblöcke in deren Aufsetzstellung wird die erfindungsgemäße Mehrfach-Steckverbindungseinheit besonders kompakt (Anspruch 3). Eine damit ausgerüstete Stromversorgungsanlage ist durch ihren aufgeräumten Erscheinungscharakter besonders übersichtlich und damit wartungsfreundlich.

Die Kennzeichnungsmerkmale der Ansprüche 4 bis 7 beschreiben Maßnahmen, mittels derer der Arbeitsaufwand bei der Installation der Stromversorgungsanlage reduziert und die Sicherheit weiter verbessert wird. Durch das Kennzeichnungsmerkmal des Anspruches 4 beispielsweise wird eine einheitliche Montagerichtung - die Einsteckrichtung von oben nämlich - für alle Installationsteile gewährleistet. Wie in Anspruch 5 beschrieben weisen die Anschlußblöcke sich in Einsteckrichtung erstreckende Kontaktzungen zur Kontaktgabe der Neutral- und Schutzverteilerleitung mit der Neutral- und Schutzsammelschiene der Sockelleiste auf. Ersichtlich ist mit dem Aufstecken des Anschlußblockes noch kein Anschluß des Verbrauchers an die Phasensammelschiene verbunden. Dies erfolgt erst durch das Einführen einer Kontaktzunge in mindestens eine Stecköffnung auf der gegen die Einsteckrichtung weisenden Oberfläche des Anschlußblockes (Anspruch 6). Der letzte Montagearbeitsgang zum Anschluß des Verbrauchers an die Phasensammelschiene wird vorteilhafterweise einfach durch Aufstecken eines Überstromschutzschalters für einen jeden Verbraucher auf die aus Sockelleiste und den jeweiligen Anschlußblöcken gebildete Montageeinheit durchgeführt.

In den Ansprüchen 8 bis 11 sind vorteilhafte Weiterbildungen der Anschlußblöcke der erfindungsgemäßen Mehrfach-Steckverbindungseinheit angegeben. So ist durch eine Ausgestaltung gemäß Anspruch 8 gewährleistet, daß auch bei den Anschlußblöcken keine spannungsführenden Teile frei nach außen stehen. Das Anschlußblockgehäuse umschließt jeweils innenliegende Klemmen, die zum Anschluß der über in der Unterseite der Anschlußblöcke angeordnete Einführungsöffnungen einführbaren Verteilerleitungen dienen. Damit ist zudem gewährleistet, daß die Verteilerleitungen von hinten an die Steckverbindungseinheit herangeführt werden können. Es stehen somit keine störenden Leitungen oder Kabelstränge in den Montagebereich der Mehrfach-Steckverbindungseinheit hinein. Angesichts der hohen Anzahl von Verteilerleitungen - pro Verbraucher werden drei Verteilerleitungen benötigt und es sind beispielsweise 16 Verbraucher pro Sockelleiste anschließbar - ist trotzdem die Übersichtlichkeit der Stromversorgungsanlage gewahrt.

Die Klemmen stehen in direktem elektrischen Kontakt mit den Kontaktzungen des Anschlußblokkes bzw. (in Montagestellung) mit der in die Stecköffnungen auf der Oberseite des Anschlußblockes einsteckbaren Kontaktzunge eines Überstromschutzschalters. Dadurch ist eine hohe Zuverlässigkeit der elektrischen Verbindungen gegeben, was durch eine Ausbildung des Erfindungsgegenstandes gemäß dem Kennzeichen des Anspruches 10 weiter verbessert wird. Jeder Anschlußblock ist demnach an der Sockelleiste mittels einer im Stufenflächenbereich am Anschlußblock axial festgelegten, in Einsteckrichtung verlaufende Fixierschraube fixierbar. Letztere greift dazu mit ihrem Freiende in jeweils eine der im Stufenflächenbereich der Sockelleiste reihenartig und drehfest im Gehäuse angeordneten Muttern bzw. Gewindeösen ein. In Aufsteckstellung ist somit jeder Anschlußblock an seinem Steckplatz festgelegt und kann nur durch Lösen der Fixierschraube entfernt werden. Diese wiederum ist unverlierbar mit dem Anschlußblockgehäuse verbunden, womit ein weiterer Störfaktor für einen geordneten Arbeitsablauf bei der Montage der Stromversorgungsanlage vermieden ist. Auch sicherheitstechnisch ist diese Maßnahme besonders vorteilhaft, da bei Stromversorgungsanlagen unbedingt vermieden werden muß, daß Metallteile unkontrolliert in die Anlage hineinfallen und beispielsweise Kurzschlüsse verursachen.

Gemäß Anspruch 11 sind die Köpfe der Fixierschrauben jeweils von der Oberseite der Anschlußblöcke aus zugänglich. Damit erfolgt also auch die Fixierung der Anschlußblöcke von oben her und ist lediglich mit Hilfe eines Schraubendrehers und getrennt vom Überstromschutzschalter durchführbar. Eine einheitliche Hauptmontagerichtung ist damit zudem gewahrt. Die kennzeichnenden Merkmale der Ansprüche 12 bis 15 betreffen Maßnahmen, die den Gesamtwiderstand der erfindungsgemäßen Montage-Steckverbindungseinheit reduzieren und eine hohe Kontaktzuverlässigkeit zwischen den einzelnen Steckverbindungen gewährleisten. Als Hauptmerkmale sind die Einstückigkeit der Sammelschienen mit ihren Kontaktlaschen und -streben sowie der Einbau von die Kontaktzungen und Kontaktlaschen umschließenden Kontaktdruckfedern zu nennen. Damit sind die mit der erfindungsgemäßen Mehrfach-Steckverbindungseinheit ausgerüsteten Verteileranlagen für eine Stromversorgung mit hohen Leistungen besonders tauglich.

Die vorteilhaften Weiterbildungen des Erfindungsgegenstandes gemäß den kennzeichnenden Merkmalen der Ansprüche 16 bis 20 betreffen den Hauptanschluß der Sockelleiste selbst. Den Ansprüchen ist zu entnehmen, daß auch beim Hauptanschluß das Konzept der berührungssicheren Abdeckung aller spannungsführenden Teile verwirklicht ist. Zudem erfolgt die Fixierung der stirnseitig über Einführungsöffnungen in den Anschlußkasten hineingeführten Hauptversorgungsleitungen mittels Klemmschrauben an den Anschlußklemmen, die über in der Oberseite der Anschlußkästen eingebrachte Öffnungen von oben zugänglich sind. Hier ist wiederum die Handhabung von oben - d.h. aus der Hauptmontagerichtung möglich.

Durch eine Ausbildung der Steckverbindungseinheit gemäß den kennzeichnenden Merkmalen des Anspruches 21 ist eine einfache und schnell montierbare Kopplung mehrerer solcher Sockelleisten in Reihe möglich. Dies erfolgt durch längsaxial fluchtende Montage zweier Sockelleisten mit gering beabstandeten, einander zugewandten Stirnseiten. Jeweils ein metallischer, mit der Phasen- bzw. Neutralsammelschiene in Kontakt stehender Verbindungsbolzen ist längsaxial verschiebbar an dem der zweiten Sockelleiste zugewandten Ende der ersten Leiste gelagert. In Inaktivstellung ist er berührungssicher vom Gehäuse der Sockelleiste umschlossen. In seiner aus dem Gehäuse der Sockelleiste stirnseitig ausgeschobenen Aktivstellung greift er mit seinem äußeren Freiende in die entsprechenden Einführungsöffnungen für den Anschluß der Phasen- und Neutralsammelschiene der zweiten Sockelleiste ein und ist dort mit den entsprechenden Anschlußklemmen verbindbar. Der Verbindungsbolzen ist dabei vorteilhafterweise in den Anschlußklemmen für die Kontaktstreben auf der dem Hauptanschluß gegenüberliegenden Stirnseite der ersten Sockelleiste gelagert. Durch Fixieren der Klemmschrauben der über den Verbindungsbolzen verbundenen Anschlußklemmen ist eine einfache und zuverlässige Festlegung der Verbindungsbolzen möglich.

Durch die Kennzeichnungsmerkmale des Anspruches 23 ist eine sichere Abdeckung der Verbindungsbolzen auch bei Aneinanderreihung von zwei oder mehreren Sockelleisten gewährleistet. Durch die Verwendung einer in Längsrichtung federbeaufschlagten, in sich verschiebbaren Teleskophülse kann sich die Abdecklänge automatisch individuell an den Montageabstand der beiden Sockelleisten anpassen. Damit ist wiederum eine Montageerleichterung und Verbesserung der Abdecksicherheit erzielt. Diese Vorteile werden auch durch eine Ausgestaltung des Erfindungsgegenstandes gemäß der Ansprüche 24 und 25 erreicht.

Als weiterer Vorteil von Mehrfach-Steckverbindungseinheiten, die mittels der Verbindungsbolzen untereinander verbunden sind, ist die sehr einfache Möglichkeit zu nennen, eine Sockelleiste nachträglich wieder zu entfernen, wenn sie stromversorgungstechnisch nicht mehr benötigt wird. Wichtig ist, daß sämtliche spannungführenden Teile auch während des Demontagevorgangs berührungsicher abgedeckt sind.

Gemäß Anspruch 26 ist parallel zur Phasen-, Neutral- und Schutzsammelschiene in der Sockelleiste eine Signalsammelschiene montiert, die über die Signalkontaktanschlüsse des Überstromschutzschalters zu dessen Überwachung mit dem Neutralanschluß im Anschlußblock verbindbar ist. Damit ist die Möglichkeit gegeben, vor allem komplexere, in größere Schaltkästen eingebaute Stromverteileranlagen effizient und gegebenenfalls extern zu überwachen. Ist die Signalsammelschiene Teil eines für jede Mehrfach-Steckverbindungseinheit separat vorhandenen Signalstromkreises, kann beispielsweise über eine Signalleuchte das Ansprechen eines Uberstromschutzschalters in einer bestimmten Steckverbindungseinheit angezeigt werden. Das Überwachungspersonal braucht lediglich an der entsprechenden Steckverbindungseinheit zu kontrollieren, welcher Überstromschutzschalter ausgelöst hat, bei welchem Verbraucher also ein Störfall aufgetreten ist.

Die Ansprüche 27 bis 30 geben mit ihren kennzeichnenden Merkmalen Maßnahmen an, mittels derer auf konstruktiv einfache Weise die nötigen elektrischen Verbindungen zwischen den einzelnen Kontaktzungen und -laschen innerhalb eines Anschlußblockes hergestellt werden. Es sind dabei möglichst viele Kontaktelemente als einstückig gefertigte Bauteile zusammengefaßt, um so Übergangswiderstände etc. zu minimieren.

Das Kennzeichnungsmerkmal des Anspruches 30 beschreibt eine einfache Anschlußmöglichkeit für die Schutzsammelschiene der erfindungsgemäßen Steckverbindungseinheit.

Zusammenfassend ist nochmals auf die Hauptvorteile des Erfindungsgegenstandes hinzuweisen:

- Wesentliche konstruktive Merkmale der erfindungsgemäßen Mehrfach-Steckverbindungseinheit wurden darauf ausgerichtet, daß spannungsführende Teile berührungsicher abgedeckt sind.
- Alle Montageschritte für die Installation einer mit den erfindungsgemäßen Mehrfach-Steckverbindungseinheiten ausgerüsteten Stromversorgungsanlage sind rationell und einfach durchführbar. Dies gilt auch bei nachträglicher Hinzunahme bzw. Wegfall von Verbindungseinheiten.
- Durch die einstückige Ausbildung beispielsweise der Sammelschienen und Verbindungselemente in den Anschlußblöcken ist die Zuverlässigkeit der erfindungsgemäßen Mehrfach-Steckverbindungseinheit weiter gesteigert. Zudem ergibt sich der Vorteil verringerter Übergangswiderstände in den stromführenden Bauteilen, die Verlustleistung innerhalb der Stromverteileranlage wird damit herabgesetzt.

Die Erfindung wird anhand der beiliegenden Figuren in einem Ausführungsbeispiel näher erläutert. Es zeigen:

Fig. 1    eine perspektivische Ansicht der Mehrfach-Steckverbindungseinheit,

Fig. 2    eine perspektivische Ansicht der Sockelleiste mit aufgesteckten Anschlußblöcken in teilweise geschnittener Darstellung,

Fig. 3    eine perspektivische Explosionsdarstellung der Sockelleiste,

Fig. 4    eine perspektivische Ansicht eines Anschlußblockes von unten,

Fig. 5    eine perspektivische Explosionsdarstellung eines Anschlußblockes,

Fig. 6    einen Teilquerschnitt entlang der Geraden VI-VI gemäß Fig. 2,

Fig. 7    einen Querschnitt durch die Sockelleiste entlang der Geraden VII-VII gemäß Fig. 2 und

Fig. 8    einen Längsschnitt durch eine Teleskophülse zur Abdeckung der Verbindungsbolzen.

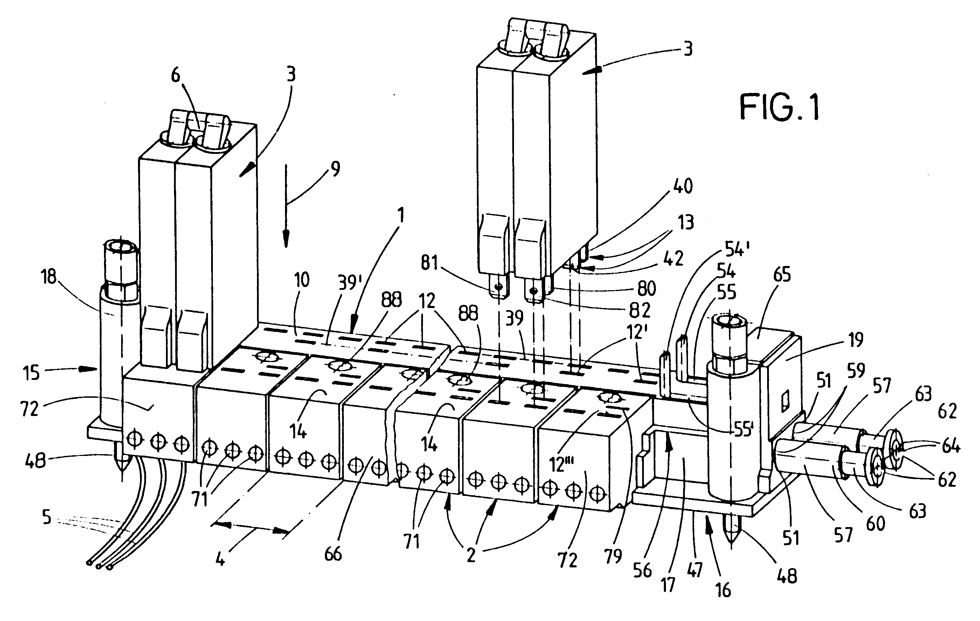

In Fig. 1 ist die erfindungsgemäße Mehrfach-Steckverbindungseinheit mit ihren Hauptbauteilen gezeigt. Es sind dies die Sockelleiste 1, die Anschlußblöcke 2 und die Überstromschutzschalter 3. Die Steckverbindungseinheit dient zur Stromversorgung eines oder mehrerer parallelgeschalteter Verbraucher (nicht dargestellt) insbesondere in Fernmeldeanlagen. Sie beinhaltet mehrere - konkret beispielsweise 16 -Steckplätze 4.

Jeder Verbraucher (nicht dargestellt) benötigt in der Regel drei Verteilerleitungen 5, nämlich jeweils einen für Phasen-, Neutral- und Schutzanschluß. Versorgungsseitig sind diese Verteilerleitungen 5 jeweils in dem gesonderten Anschlußblock 2 zusammengefaßt, der jeweils an einem der Steckplätze 4 auf die Sockelleiste 1 aufsetzbar ist und damit eine elektrische und mechanische Verbindung mit der Sockelleiste 1 herstellt. Vervollständigt wird der elektrische Anschluß eines Verbrauchers über die erfindungsgemäße Mehrfach-Steckverbindungseinheit durch das Aufsetzen eines Überstromschutzschalters 3 auf die Sockelleisten 1-Anschlußblock 2-Baugruppe. Die Überstromschutzschalter 3 sind im Ausführungsbeispiel als Zweifach-Schalter ausgebildet, um erhöhte Abschaltleistungen erzielen zu können. Nach dessen Schließen mittels der auf der Oberseite des Überstromschutzschalters 3 gelegenen Handhabe 6 ist der Verbraucher über die Verteilerleitungen 5 und die Mehrfach-Steckverbindungseinheit komplett angeschlossen.

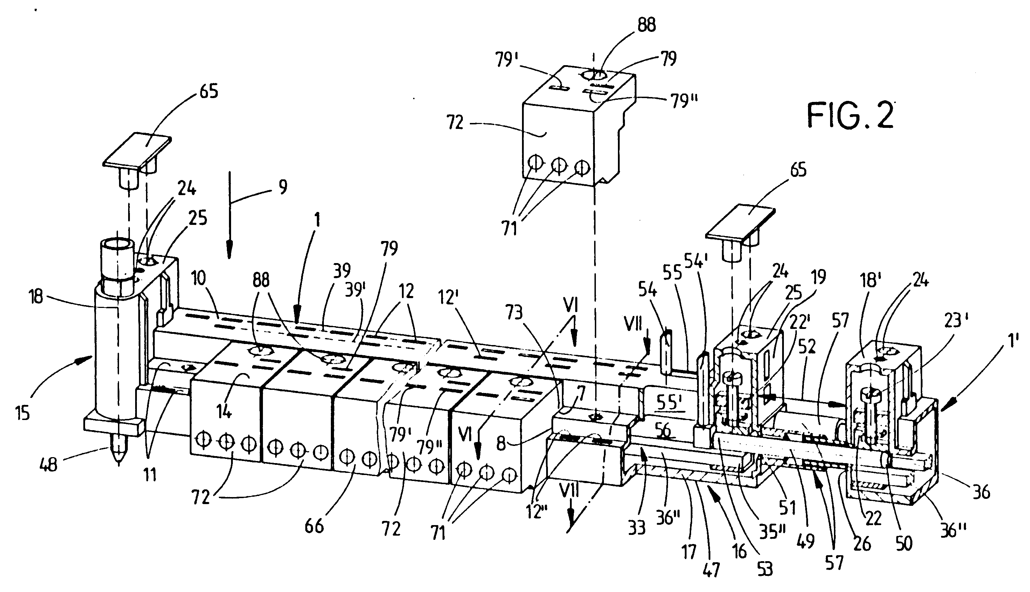

Anhand der Fig. 2 ist der grobe mechanische Aufbau der Sockelleiste 1 und der Anschlußblöcke 2 erklärbar. Beide Bauteile weisen im Querschnitt jeweils ein einander zugewandtes Stufenprofil auf, das die Stufenanlageflächen 7,8 von Sockelleiste 1 bzw. Anschlußblock 2 bildet. Die Stufenanlagefläche 7 der Sockelleiste 1 weist entgegen der Einsteckrichtung 9 der Anschlußblöcke 2 bzw. Überstromschutzschalter 3. Entsprechend entgegengesetzt gerichtet ist die Stufenanlagefläche 8 des Anschlußblockes 2.

Auf der Oberseite 10 bzw. auf einer der entgegen der Einsteckrichtung 9 weisenden Stufenteilfläche 11 liegen in Längsrichtung aneinandergereiht Stecköffnungen 12,12′,12″,12‴ die den Gehäuseinnenraum der Sockelleiste 1 für die Kontaktzungen 13 der Uberstromschutzschalter 3 bzw. Anschlußblöcke 2 zugänglich machen.

Sockelleiste 1 und Anschlußblöcke 2 bilden in deren Aufsteckstellung eine im Querschnitt etwa rechteckförmige Baugruppe mit gleichebig verlaufenden Oberseiten 10,14.

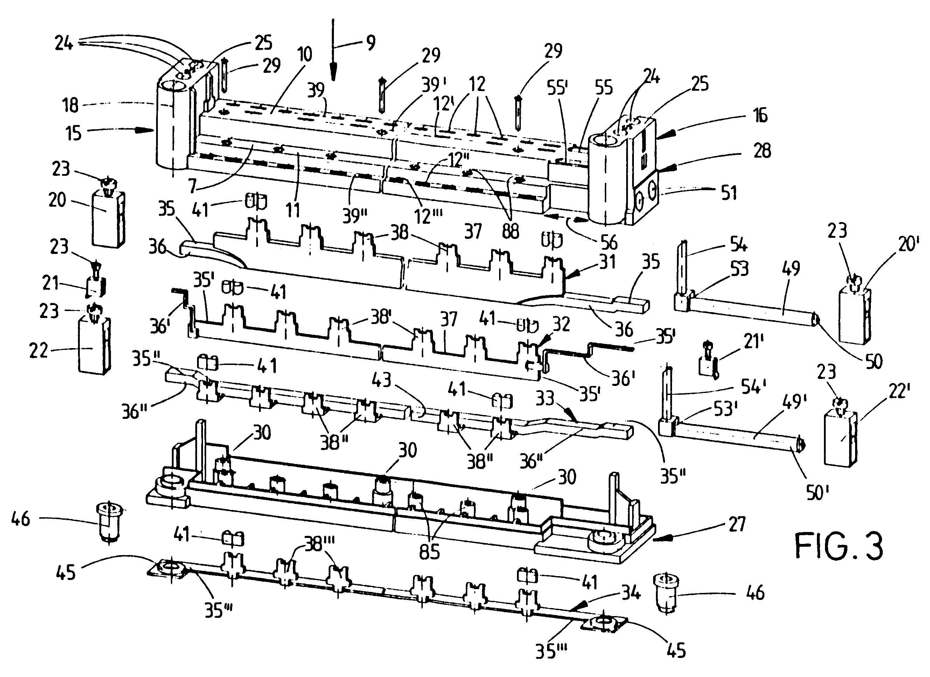

An seinen beiden Enden 15,16 mündet das Gehäuse 17 der Sockelleiste 1 in die beiden Anschlußkäster 18,19. Im in Fig. 2 auf der linken Seite gelegenen Anschlußkasten 18 wird der Hauptanschluß der Sockelleiste 1 mittels (nicht dargestellter) Hauptversorgungsleitungen für den Phasen-, Neutral- und Sammelanschluß vorgenommen. Wie aus den Fig. 2 und 3 deutlich wird, sind in dem über die Oberseiten 10,14 hinausragenden Anschlußkasten 18 dazu in Querrichtung parallel nebeneinanderliegende Anschlußklemmen 20,21,22 vorhanden, die als sogenannte Mantelklemmen jeweils mit einer Klemmschraube 23 versehen sind. Die Längsrichtung dieser Klemmschrauben 23 liegt parallel zur Eirsteckrichtung 9. Sie sind von oben her über Durchgrifföffnungen 24 in der Deckwand 25 des Anschlußkastens 18 betätigbar. An der Stirnseite des Anschlußkastens 18 sind Einführungsöffnungen 26 für die (nicht dargestellten) Hauptversorgungsleitungen eingebracht. Letztere enden in den jeweiligen Anschlußklemmen 20,21,22.

Der genaue Aufbau der Sockelleiste 1 ist in Fig. 3 mittels einer Explosionsdarstellung gezeigt. Das Gehäuse 17 ist aus Isolierwerkstoff gefertigt und ist aus einem Gehäuseunterteil 27 und einem Gehäuseoberteil 28 zusammengesetzt. Letzteres wölbt sich deckelartig über das Unterteil 27 und ist mit diesem in Montageendstellung über Nieten 29 verbunden, die in die an den Boden des Gehäuseunterteiles 27 in Einsteckrichtung 9 angeformten Hülsenvorsprünge 30 eingreifen. Zwischen Gehäuseunter- 27 und -oberteil 28 liegen parallel nebeneinander die Phasen- 31, Signal- 32, Neutral- 33 und Schutzsammelschiene 34 in Längsrichtung der Sockelleiste 1.

Die in Betrachtungsrichtung gemäß Fig. 3 hinten liegende Phasensammelschiene 31 ist als im Querschnitt flachrechteckiges, parallel zur Einsteckrichtung 9 ausgerichtetes Stanzstück ausgebildet. An seinen beiden Freienden sind einstückig Kontaktstreben 36 mit etwa quadratischem Querschnitt in Längsrichtung angeformt. Die eine Kontaktstrebe 36 auf der Seite des Anschlußkastens 18 greift in die Anschlußklemme 20 ein. Durch Anziehen der zugehörigen Klemmschraube 23 wird die Phasensammelschiene 31 fest mit der Phasenhauptanschlußleitung (nicht dargestellt) elektrisch sowie mechanisch verbunden. An die gegen die Einsteckrichtung 9 weisende Randkante 37 der Phasensammelschiene 31 sind einstückig Kontaktlaschen 38 angeformt. Diese weisen entgegen die Einsteckrichtung 9 und fluchten im wesentlichen mit jeder zweiten der Stecköffnungen 12 der in Betrachtungsrichtung gemäß Fig. 3 hinten liegenden Stecköffnungsreihe 39. Bei einer 16-fach-Verbindungseinheit sind 16 solcher Kontaktlaschen 38 vorhanden, während die Stecköffnungsreihe 39 zweiunddreißig Stecköffnungen 12 umfaßt. Ein Steckplatz 4 der Mehrfach-Steckverbindungseinheit umfaßt also unter anderem eine Kontaktlasche 38 und zwei nebeneinanderliegende Stecköffnungen der Stecköffnungsreihe 39. Beim Aufsetzen eines Überstromschutzschalters 3 auf einen solchen Steckplatz 4 gelangt dessen Phaseneingangskontaktzunge 40 in flächige Anlage an die Kontaktlasche 38, wodurch eine elektrische Verbindung hergestellt ist. Der Kontaktdruck zwischen Lasche und Zunge wird durch jeweils auf die Kontaktlaschen 38 aufgeschobene, beide Bauteile umfassende Kontaktdruckfedern 41 verstärkt.

Neben der Phasensammelschiene 31 ist parallel zu dieser die Signalsammelschiene 32 angeordnet, deren Kontaktlaschen 38′ mit den Kontaktlaschen 38 der Phasensammelschiene 31 in Querrichtung der Sockelleiste fluchten. Die Kontaktstreben 36′ sind in Längsrichtung an die Freienden 35′ der Signalsammelschiene 32 angeschweißt. Hier ist keine einstückige Verbindung notwendig, da es im Signalstromkreis nicht auf möglichst geringe Übergangswiderstände ankommt. In Einsteckrichtung 9 fluchten die Kontaktlaschen 38′ der Signalsammelschiene 32 mit den Stecköffnungen 12′ der vor der Stecköffnungsreihe 39 angeordneten Reihe 39′. In diese Stecköffnungen 12′ greifen jeweils die Si-

gnaleingangskontaktzunge 42 der Überstromschutzschalter 3 ein und liegen in deren Aufsteckstellung an den Kontaktlaschen 38' an. Wiederum sind Kontaktdruckfedern 41 zur Erhöhung des Kontaktdruckes vorhanden. Die auf der Seite des Anschlußkastens 18 liegende Kontaktstrebe 36' der Signalsammelschiene 32 greift in die geringer dimensionierte Anschlußklemme 21 ein und ist dort elektrisch und mechanisch mit dem Signalhauptanschluß (nicht dargestellt) verbunden.

In ihrer Form abweichend ist die parallel in Längsrichtung vor der Phasen- 31 und Signalsammelschiene 32 angeordnete Neutralsammelschiene 33 ausgebildet. Eine im Querschnitt etwa quadratische Metallstange 43 bildet die tragende Konstruktion der Neutralsammelschiene 33. An deren vordere, parallel zur Einsteckrichtung 9 liegende Seitenkante sind L-förmige Kontaktlaschen 38" durch Kaltverformung einstückig angesetzt. Deren L-Vertikalschenkel fluchtet jeweils mit jeder zweiten Stecköffnung 12" der auf der Oberseite 10 der Stufenteilfläche 11 angeordneten Stecköffnungsreihe 39". Das Freiende 35" der Kontaktstrebe 36" auf der zum Anschlußkasten 18 weisenden Seite der Neutralsammelschiene 33 greift in die Anschlußklemme 22 ein. Dort ist auch das Anschlußende der Neutralhauptanschlußleitung (nicht dargestellt) angeordnet. Durch Anziehen der Klemmschraube 23" ist ein zuverlässiger elektrischer Anschluß der Neutralsammelschiene 33 geschaffen.

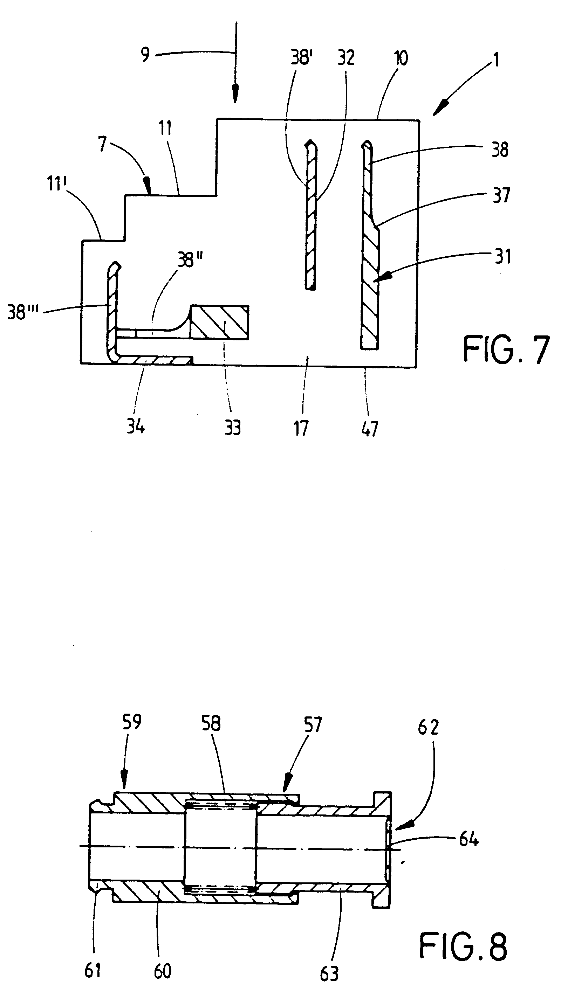

Flankiert wird die Neutralsammelschiene 33 von der Schutzsammelschiene 34, die als Stanzteil mit flachrechteckigem Querschnitt und einstückig angeformten Kontaktlaschen 38''' ausgebildet ist. Die Schutzsammelschiene 34 liegt dabei in einer zur Einsteckrichtung rechtwinkligen Ebene unterhalb der Neutralsammelschiene 33 (siehe dazu auch Fig. 7). Die Kontaktlaschen 38''' sind rechtwinklig dazu entgegen die Einsteckrichtung 9 weisend abgebogen. Bezogen auf die Längsrichtung der Sockelleiste 1 liegen die Kontaktlaschen 38" der Neutralsammelschiene 33 und die Kontaktlaschen 38''' der Schutzsammelschiene 34 auf einer Linie und wechseln sich gegenseitig ab. Die Kontaktlaschen 38''' der Schutzsammelschiene 34 fluchten mit den Stecköffnungen 12''' der Stecköffnungsreihe 39". An ihren Freienden 35''' weist die Schutzsammelschiene 34 einen einstückig angeformten, ringförmigen Bund. 45 auf, dessen Innenöffnung in Erstreckungsrichtung 9 von einer Nietbuchse 46 durchsetzt ist. Diese ist mit einem in Einsteckrichtung 9 aus der Unterseite 47 des Gehäuseunterteiles 27 herausragenden Erdungsbolzen 48 verbunden, über den die Schutzerdung der Schutzsammelschiene 34 vorgenommen wird.

In Zusammenschau der Fig. 2 und 3 wird die Längsaneinanderreihung mehrerer Sockelleisten 1,1' erläutert. In dem der Hauptanschlußseite gegenüberliegenden Anschlußkasten 19 an der Stirnseite der Sockelleiste 1 sind zwei weitere Anschlußklemmen 20',22' vorhanden, in die die zweiten Freienden 35,35" der Phasen- 31 und Neutralsammelschiene 33 eingreifen. Gleichzeitig ist in diesen Anschlußklemmen 20',22' jeweils ein metallischer Verbindungsbolzen 49,49' längsverschiebbar gelagert. Durch Anziehen der Klemmschrauben 23' der Anschlußklemmen 20',22' sind die Verbindungsbolzen 49 und die Freienden 35,35" der Sammelschienen gegeneinander fixierbar. Bei Verwendung einer einzigen Sockelleiste 1 liegen die Verbindungsbolzen 49,49' auf ihrer vollen Länge innerhalb des Gehäuses 17. Soll eine weitere Sockelleiste 1' angereiht werden, werden die Verbindungsbolzen 49,49' aus dem Gehäuse 17 in Längsrichtung herausgeschoben. Die äußeren Enden 50,50' der Verbindungsbolzen 49,49' durchlaufen bei der Ausschubbewegung dabei an der Stirnseite des Anschlußkastens 19 angeordnete Öffnungen 51, erstrecken sich über den Montageabstand 52 zwischen den beiden Sockelleisten 1,1' und greifen in die Einführungsöffnungen 26' der zweiten Sockelleiste 1' ein. Dort werden sie im Anschlußkasten 18' mit den Freienden 35,35" der Phasen- 31' und Neutralsammelschiene 33' verbunden. Der Anschlußkaster 18' mit seinen Anschlußklemmen 20',21' und 22' ist analog wie bei der Sockelleiste 1 aufgebaut. Die Sockelleiste 1' ist somit über die Sockelleiste 1 mit dem Phasen- und Neutralhauptanschluß verbindbar. Zur leichteren Ausschiebbarkeit der Verbindungsbolzen 49,49' weisen diese an ihren inneren Enden 53,53' entgegen der Einsteckrichtung 9 nach oben abstehende Schiebestifte 54,54' aus Isolierwerkstoff auf. Diese durchgreifen in Längsrichtung verlaufende Führungsschlitze 55,55' in der Oberseite 10 der Sockelleiste 1. Die Führungsschlitze 55,55' sind in Verlängerung der Stecköffnungsreihe 39 in einem Zwischenstück 56 zwischen dieser und dem Anschlußkasten 19 angeordnet.

Zur Abdeckung der Verbindungsbolzen 49,49' zwischen den beiden Sockelleisten 1,1' sind die Bolzen mit jeweils einer Teleskophülse 57 versehen, die in Längsrichtung in sich verschiebbar und von einer Druckfeder 58 beaufschlagt ist (Fig. 8). Das in Richtung der Sockelleiste 1 weisende Rastende 59 der Teilhülse 60 weist einen ringartigen Rastvorsprung 61 auf, der in die Öffnung 51 einrastbar und damit mit der Sockelleiste 1 fest verbindbar ist. Die zweite Teilhülse 63 ist an ihrem Anlageende 62 mit einem Deckel 64 versehen, der erst dann herausgetrennt wird, wenn die Anreihung einer zweiten Sockelleiste 1' an eine vorhandene Sockelleiste 1 vorgenommen werden soll. Damit sind die Verbindungsbolzen 49 jederzeit berührungssicher abgedeckt. Dem gleichen Zweck dienen die Deckel 65, die auf die Durchgrifföffnungen 24 auf der Oberseite 10 der Anschlußkästen 18,19 aufsetzbar sind.

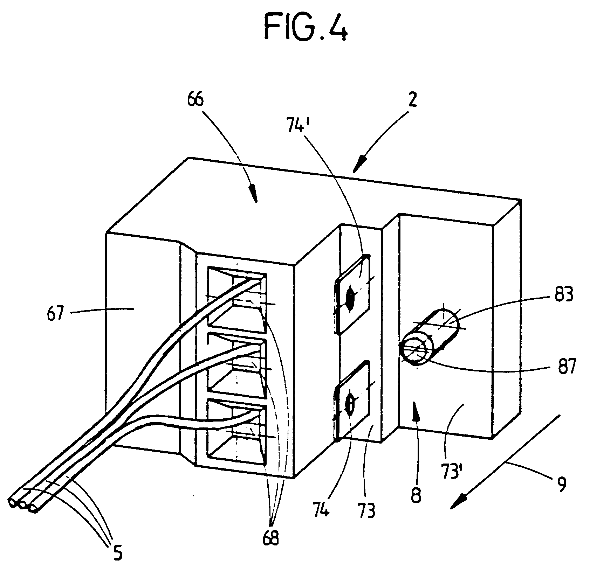

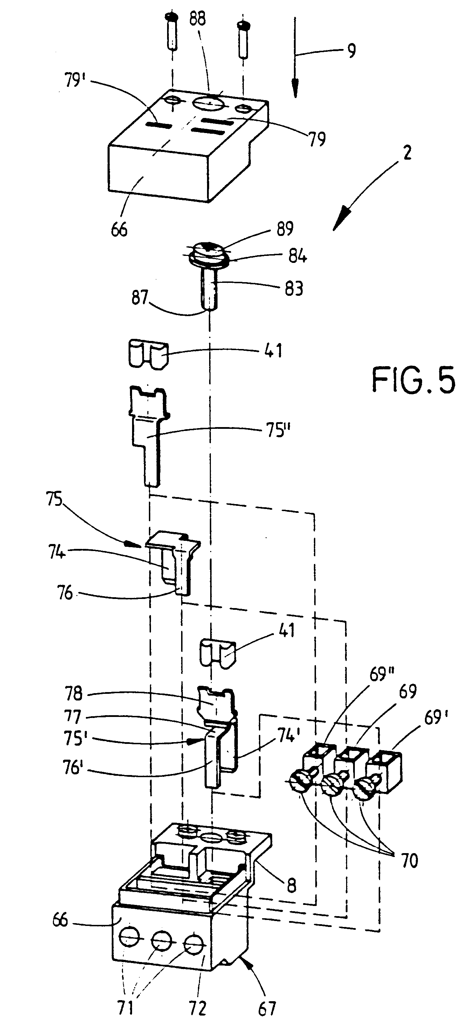

Anhand der Figuren 4 bis 6 ist der genaue Aufbau der Anschlußblöcke 2 sowie deren Fixierung an der Sockelleiste 1 erklärbar. Die Anschlußblöcke 2 bestehen im wesentlichen aus einem aus Isolierwerkstoff gefertigten Gehäuse 66, das im Querschnitt ein auf dem Kopf stehendes Stufenprofil aufweist. Die Stufenanlageflächen 8 sind in Aufsteckstellung der Anschlußblöcke 2 den Stufenanlageflächen 7 der Sockelleiste zugewandt und liegen formschlüssig an diesen an. Seitlich des Stufenprofils sind in die Unterseite 67 in Längsrichtung nebeneinanderliegend drei Einführungsöffnungen 68 für die Verteilerleitungen 5 für den Phasen-, Neutral- und Schutzanschluß des Verbrauchers eingeformt. Die Anschlußenden der Verteilerleitung 5 münden in liegend angeordneten Anschlußklemmen 69. Deren Klemmschrauben 70 sind über Durchgriffsöffnungen 71 betätigbar, die die längsrichtungsparallelen Seitenwände 72 der Anschlußblöcke 2 durchsetzen. Aus der mit der Stecköffnungsreihe 39″ der Sockelleiste 1 fluchtenden Stufenteilfläche 73 der Anschlußblöcke 2 treten in Einsteckrichtung 9 nach unten zwei gleichebig angeordnete Kontaktzungen 74,74′ aus, die in Aufsteckstellung der Anschlußblöcke jeweils in die Stecköffnungen 12″ bzw. 12‴ der Sockelleiste 1 eingreifen und mit einer der Kontaktlaschen 38″ der Neutralsammelschiene 33 bzw. einer der Kontaktlaschen 38‴ der Schutzsammelschiene 34 in flächige Anlage treten. Der Kontaktdruck zwischen den Kontaktzungen 74,74′ bzw. -lasche 38″ bzw. 38‴ wird wiederum durch Kontaktdruckfedern 41 erhöht. In Fig. 5 ist der interne, weitere Verlauf der Kontaktzungen 74,74′ gezeigt. Die Kontaktzunge 74 bildet den einen U-Schenkel eines U-förmigen Kontaktstückes 75, dessen zweiter U-Schenkel von einer Kontaktlasche 76 gebildet ist. Diese greift in die Anschlußklemme 69 für den Anschluß der Schutzverteilerleitung 5 ein. Damit ist diese mit der Schutzsammelschiene 34 elektrisch verbunden. Die zweite Kontaktzunge 74′ ist der U-Schenkel eines zweiten U-förmigen Kontaktstückes 75′, dessen zweiter U-Schenkel wiederum von einer Kontaktlasche 76′ gebildet ist. Diese greift in die Anschlußklemme 69′ für die Neutralverteilerleitung 5 des Verbrauchers ein. Damit ist auch diese Verteilerleitung an die zugehörige Sammelschiene (Neutralsammelschiene 33) angeschlossen. An das U-Basisstück 77 dieses Kontaktstückes 75′ ist eine weitere Kontaktlasche 78 entgegen der Einsteckrichtung 9 nach oben weisend angeformt. Die Kontaktlasche 78 fluchtet mit der Stecköffnung 79 in der Oberseite 14 des Anschlußblockgehäuses 66. Die Stecköffnung 79 dient zur Aufnahme der Signalausgangskontaktzunge 80 des Überstromschutzschalters, welche in dessen Aufsteckstellung mit der Kontaktlasche 78 in flächige Anlage gerät. Damit ist ein durchgängiger Signalstromkreis zwischen der Signalsammelschiene 32 über den Überstromschutzschalter 3 bis zur Neutralsammelschiene 33 geschaffen, mittels dem eine Zustandsüberwachung der Überstromschutzschalter 3 einer Sockelleiste 1 gewährleistet ist.

Im Gehäuse 66 des Anschlußblockes ist zudem ein langgestrecktes Kontaktstück 75″ vorhanden, dessen unteres Ende in die Anschlußklemme 69″ für die Phasenverteilerleitung eingreift. Das kontaktlaschenartig ausgebildete obere Ende fluchtet mit einer weiteren Stecköffnung 79′ in der Oberseite 14 der Anschlußblöcke 2 und wird von der Phasenausgangskontaktzunge 81 des Überstromschutzschalters 3 in dessen Aufsteckstellung beaufschlagt. Dadurch ist auch die Phasenverteilerleitung des Verbrauchers mit der Phasensammelschiene 31 elektrisch verbunden und gleichzeitig über den Überstromschutzschalter 3 im Kurzschluß- bzw. Überstromfall abgesichert. Die verbleibenden Kontaktzungen des Überstromschutzschalters 3 sind Blindkontaktzungen 82, die mittels ihres Einsteckens in entsprechende Stecköffnungen in den Anschlußblöcken 2 bzw. der Sockelleiste 1 lediglich die Aufgabe einer verbesserten mechanischen Befestigung übernehmen, anschlußtechnisch jedoch nicht relevant sind.

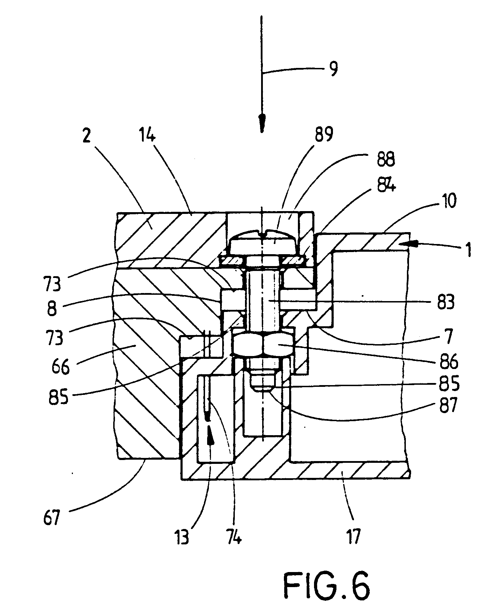

In Fig. 6 ist besonders deutlich die Befestigungsvorrichtung für die Anschlußblöcke 2 an der Sockelleiste 1 dargestellt. Eine Fixierschraube 83 durchsetzt die Anschlußblöcke 2 in Einsteckrichtung 9 und tritt aus einer ihrer Stufenteilflächen 73′ nach unten aus. Die Fixierschraube 83 ist längsaxial mittels der am Gehäuse 66 befestigten Beilagscheibe 84 festgelegt. In der mittleren Stufenteilfläche 11′ der Sockelleiste 1 sind reihenartig Bohrungen 85 angeordnet, mit denen drehfest zwischen dem Gehäuseober- 28 und dem -unterteil 27 der Sockelleiste 1 eingeschlossene Muttern 86 fluchten. Soll ein Anschlußblock 2 an einen Steckplatz 4 gesetzt werden, so greift zuerst das Freiende 87 der Fixierschraube 83 in die Bohrungen 85 ein, bis es an der Gewindebohrung der Mutter 86 anschlägt. Ab dieser Position muß der Anschlußblock mittels Drehung der Fixierschraube 83 in seine Montageendstellung verbracht werden. Dazu ist auf der Oberseite 14 der Anschlußblöcke 2 jeweils eine kreisförmige Ausnehmung 88 eingebracht, über die jeweils die Köpfe 89 der Fixierschrauben 83 zugänglich sind. Durch die erfindungsgemäße Fixierkonstruktion ist gewährleistet, daß die ordnungsgemäße Anschlußreihenfolge immer eingehalten wird. Auf die Sockelleiste muß getrennt jeweils der Anschlußblock aufgeschraubt werden, bevor durch Aufstecken des Überstromschutzschalters alle elektrischen Verbindungen hergestellt sind. Ebenso wird der Verbraucher zuerst durch Abziehen des Überstromschutzschalters phasenseitig getrennt, bevor der Anschlußblock abgeschraubt werden kann.

Zusammenfassend wird aus den vorstehenden Erläuterungen klar, daß bei der Mehrfach-Steckverbindungseinheit besonderes Augenmerk auf Berührungssicherheit durch Abdeckung aller spannungsführenden Teile sowie auf die Schaffung eines Steckverbinders gerichtet wurde, der die Anschlußarbeit bei einer Stromverteileranlage weitgehend rationalisiert und vereinfacht und geringe Übergangswiderstände erlaubt.

## Patentansprüche

1. Mehrfach-Steckverbindungseinheit für die Stromversorgung eines oder mehrerer parallelgeschalteter Verbraucher insbesondere in Fernmeldeanlagen
   - mit in einer Sockelleiste (1) aus Isolierwerkstoff parallel zueinander angeordneten Sammelschienen (31,33,34) für Phasen-, Neutral- und Schutzanschluß und
   - mit jeweils einem zwischen der Phasensammelschiene (31) und dem jeweiligen Verbraucher einsetzbaren Überstromschutzschalter (3),
   - wobei der oder die Verbraucher jeweils über Verteilerleitungen (5) für Phasen-, Neutral und Schutzanschluß angeschlossen sind, die mit den jeweiligen Sammelschienen (31,33,34) mittels der Mehrfach-Steckverbindungseinheit elektrisch verbindbar sind,
   gekennzeichnet durch folgende Merkmale:
   a) Die Sammelschienen (31,33,34) sind allseitig vom Gehäuse (17) der Sockelleiste (1) umschlossen und über in einer Gehäusewand angeordnete, mit jeweils den Sammelschienen (31,33,34) im wesentlichen fluchtende Stecköffnungen (12,12′, 12″,12‴) für Kontaktzungen (13) zugänglich;
   b) die Verteilerleitungsanschlüsse für einen jeden Verbraucher sind in jeweils einem gesonderten Anschlußblock (2) zusammengefaßt;
   c) die Anschlußblöcke (2) sind unter direkter Kontaktgabe mit der Neutral-(33) und Schutzsammelschiene (34) entlang der Sockelleiste (1) aneinandergereiht auf diese aufsetzbar; und
   d) die Überstromschutzschalter (3) sind auf das Gehäuse (17) der Sockelleiste (1) unter Kontaktgabe mit der Phasensammelschiene (31) aufsetzbar und kontaktieren jeweils gleichzeitig in Aufsetzstellung die Phasenanschlüsse der zwischen Sockelleiste (1) und Überstromschutzschalter (3) eingeschlossenen Anschlußblöcke (2).

2. Steckverbindungseinheit nach Anspruch 1, dadurch gekennzeichnet, daß die Sockelleiste (1) und die Anschlußblöcke (2) im Querschnitt in ihren in Aufsetzstellung einander zugewandten Seitenwandbereichen eine stufenförmige, gegenseitig formangepaßte Einkehlung aufweisen.

3. Steckverbindungseinheit nach Anspruch 2, dadurch gekennzeichnet, daß die Sockelleiste (1) und die Anschlußblöcke (2) in deren Aufsetzstellung eine Montageeinheit mit einem im wesentlichen rechteckförmigen Querschnitt bilden, deren gegenseitige Anlageflächen (7,8) durch die Einkehlung als zwischen der Unter-(47) und Oberseite (10,14) der Montageeinheit verlaufende Stufenflächen ausgebildet sind.

4. Steckverbindungseinheit nach einem der vorgenannten Ansprüche, dadurch gekennzeichnet, daß die Stecköffnungen (12,12′,12″,12‴) in der Sockelleiste (1) auf deren gegen die Einsteckrichtung (9) der Anschlußblöcke (2) weisenden Oberseite (10) bzw. Stufenteilfläche (11) liegen.

5. Steckverbindungseinheit nach einem der vorgenannten Ansprüche, dadurch gekennzeichnet, daß die Anschlußblöcke (2) im Bereich ihrer nach unten weisenden Stufenteilfläche (73) jeweils mit zwei sich in Einsteckrichtung (9) erstreckenden Kontaktzungen (74,74′) zur Kontaktgabe der Neutral-und Schutzverteilerleitung mit der Neutral-(33) und Schutzsammelschiene (34) der Sockelleiste (1) versehen sind.

6. Steckverbindungseinheit nach Anspruch 5, dadurch gekennzeichnet, daß die Anschlußblöcke (2) auf ihrer gegen die Einsteckrichtung (9) weisenden Oberfläche (14) jeweils mit mindestens einer Stecköffnung (79,79′) versehen sind, durch die eine Kontaktzunge zur Kontaktierung der Phasenverteilerleitung (5) einführbar ist.

7. Steckverbindungseinheit nach einem der vorgenannten Ansprüche, dadurch gekennzeichnet, daß die Überstromschutzschalter (3) mit ihren sich jeweils von ihrer Unterseite aus in Einsteckrichtung erstreckenden Kontaktzungen (40,42,80,81) in die Stecköffnungen (12,12',79,79') auf der im wesentlichen ebenen Oberseite (10,14) der Montageeinheit aus Sockelleiste (1) und Anschlußblöcke (2) einsteckbar sind.

8. Steckverbindungseinheit nach einem der vorgenannten Ansprüche,
   dadurch gekennzeichnet,
   daß die Anschlußblöcke (2) mit ihrem Gehäuse (66) innenliegende Klemmen (69,69',69") umschließen, die zum Anschluß der über in der Unterseite (67) der Anschlußblöcke (2) angeordnete Einführungsöffnungen (68) einführbaren Verteilerleitungen (5) dienen.

9. Steckverbindungseinheit nach Anspruch 8.
   dadurch gekennzeichnet,
   daß die Klemmen (69,69',69") mittels der beiden in Einsteckrichtung (9) angeordneten Kontaktzungen (74,74') des Anschlußblockes (2) bzw. mittels einer einsteckbaren Kontaktzunge (80,81) des Überstromschutzschalters (3) kontaktierbar sind.

10. Steckverbindungseinheit nach einem der Ansprüche 3 bis 9,
    dadurch gekennzeichnet,
    daß jeder Anschlußblock (2) an der Sockelleiste (1) mittels einer im Bereich einer Stufenteilfläche (73) am Anschlußblock (2) axial festgelegten, in Einsteckrichtung (9) verlaufenden Fixierschraube (83) fixierbar ist, die mit ihrem Freiende (87) in jeweils eine der im Bereich der Stufenteilfläche (11) der Sockelleiste (1) reihenartig und drehfest im Gehäuse (17) angeordneten Muttern (86) bzw. Gewindehülsen eingreift.

11. Steckverbindungseinheit nach Anspruch 10,
    dadurch gekennzeichnet,
    daß die Köpfe (89) der Fixierschrauben (83) jeweils von der Oberseite (14) der Anschlußblöcke (2) aus zugänglich sind.

12. Steckverbindungseinheit nach einem der vorgenannten Ansprüche,
    dadurch gekennzeichnet,
    daß die Sammelschienen (31,32,33,34) als einstückige, gestanzte und/oder kaltverformte, streifenartige Metallformteile ausgebildet sind.

13. Steckverbindungseinheit nach Anspruch 12,
    dadurch gekennzeichnet,
    daß an die Sammelschienen (31,32,33,34) in Einbaustellung fluchtend mit den Stecköffnungen (12,12',12",12‴) entgegen der Einsteckrichtung weisende Kontaktlaschen (38,38',38",38‴)

einstückig angeformt sind, die in Aufsetzstellung der Anschlußblöcke (2) bzw. Überstromschutzschalter (3) von deren Kontaktzungen (13) beaufschlagt sind.

14. Steckverbindungseinheit nach Anspruch 13,
    dadurch gekennzeichnet,
    daß zur Erhöhung des Kontaktdruckes in Aufsetzstellung der Anschlußblöcke (2) bzw. Überstromschutzschalter (3) deren Kontaktzungen (13) und die Kontaktlaschen (38,38',38",38‴) von Kontaktdruckfedern (41) umschlossen sind.

15. Steckverbindungseinheit nach einem der Ansprüche 12 bis 14,
    dadurch gekennzeichnet,
    daß an die Freienden (35,35',35")der Sammelschienen (31,32,33) in deren Längsrichtung verlaufende Kontaktstreben (36,36',36") einstückig angeformt sind.

16. Steckverbindungseinheit nach einem der Ansprüche 12 bis 15,
    dadurch gekennzeichnet,
    daß die stirnseitigen Enden (15,16) der Sockelleiste (1) jeweils in einen Anschlußkasten (18,19) münden, in dem die Anschlußklemmen (20,21,22) für die Sammelschienen (31,32,33) nach außen abgedeckt einliegen.

17. Steckverbindungseinheit nach Anspruch 15 und 16,
    dadurch gekennzeichnet,
    daß die Kontaktstreben (36,36',36") der Sammelschienen (31,32,33) mit ihren Freienden (35,35',35") in die Anschlußklemmen (20,21,22) in den Anschlußkästen (18,19) eingreifen.

18. Steckverbindungseinheit nach Anspruch 16 oder 17,
    dadurch gekennzeichnet,
    daß die Klemmschrauben (23) der in Querrichtung nebeneinanderliegenden Anschlußklemmen (20,21,22) über in der Deckwand (25) der Anschlußkästen (18,19) eingebrachte Durchgriffsöffnungen (24) von oben zugänglich sind.

19. Steckverbindungseinheit nach Anspruch 18,
    dadurch gekennzeichnet,
    daß die Durchgriffsöffnungen (24) durch einen Deckel (65) verschließbar sind.

20. Steckverbindungseinheit nach einem der Ansprüche 16 bis 19,
    dadurch gekennzeichnet,
    daß einer der beiden Anschlußkästen (18) als Hauptanschluß in seiner Stirnseite mit den Anschlußklemmen (20,21,22) fluchtende Einführungsöffnungen (26) aufweist, durch die die Hauptversorgungsleitungen für den Anschluß der Phasen-(31) und Neutralsammelschiene (33) in die Sockelleiste (1) münden.

21. Steckverbindungseinheit nach einem der Ansprüche 16 bis 20,
    dadurch gekennzeichnet,
daß auf der dem Hauptanschluß gegenüberliegenden Stirnseite der Sockelleiste (1) jeweils ein aus metallischem Werkstoff gefertigter, mit der Phasen-(31) bzw. Neutralsammelschiene (33) in Kontakt stehender Verbindungsbolzen (49,49′) längsaxial verschiebbar gelagert ist, der jeweils
    - in Inaktivstellung vom Gehäuse (17) der Sockelleiste (1) umschlossen ist und
    - in aus dem Gehäuse (17) der Sockelleiste (1) stirnseitig ausgeschobener Aktivstellung mit seinem äußeren Freiende (50,50′) in die entsprechenden Einführungsöffnungen (26) für den Anschluß der Phasen-(31) und Neutralsammelschiene (33) einer zweiten, in Längsrichtung an die erste Sockelleiste (1) angereihten Sockelleiste (1′) einführbar und mit den entsprechen Anschlußklemmen (20,22) verbindbar ist.

22. Steckverbindungseinheit nach Anspruch 21,
    dadurch gekennzeichnet,
daß die Verbindungsbolzen (49,49′) jeweils die Anschlußklemmen (20′,22′) für die Kontaktstreben (36,36″) auf der dem Haupanschluß gegenüberliegenden Stirnseite durchgreifen.

23. Steckverbindungseinheit nach Anspruch 21 oder 22,
    dadurch gekennzeichnet,
daß jeder Verbindungsbolzen (49,49′ auf seiner freien Verbindungslänge zwischen den beiden Sockelleisten (1,1′) von einer in sich verschiebbaren, in Längsrichtung federbeaufschlagten Teleskophülse (57) umgeben ist, die mit ihrem Befestigungsende (Rastende 59) an der dem Hauptanschluß gegenüberliegenden Stirnseite des Sockelleistengehäuses (17) befestigt ist.

24. Steckverbindungseinheit nach einem der Ansprüche 21 bis 23,
    dadurch gekennzeichnet,
daß jeder Verbindungsbolzen (49,49′) an seinem inneren Ende (53,53′) mit einem rechtwinklig nach oben abstehenden, aus Isolierwerkstoff gefertigten Schiebestift (54,54′) versehen ist.

25. Steckverbindungseinheit nach Anspruch 24,
    dadurch gekennzeichnet,
daß der Schiebestift (54,54′) mit seinem Freiende einen in Längsrichtung verlaufenden Führungsschlitz (55,55′) in der Oberseite (10) der Sockelleiste (1) durchgreift.

26. Steckverbindungseinheit nach einem der vorgenannten Ansprüche,
    dadurch gekennzeichnet,
daß in der Sockelleiste (1) eine Signalsammelschiene (32) parallel zur Phasen-(31), Neutral-(33) und Schutzsammelschiene (34) montiert ist, die über die Signalkontaktanschlüsse (42,80) des Überstromschutzschalters (3) zu dessen Überwachung mit dem Neutralanschluß (69′) im Anschlußblock (2) verbindbar ist.

27. Steckverbindungseinheit nach Anspruch 26,
    dadurch gekennzeichnet,
daß die Kontaktzunge (74′) des Anschlußblokkes (2) für den Neutralanschluß den U-Schenkel eines in Einsteckrichtung (9) offenen, U-förmigen Kontaktstückes (75′) bildet,
    - dessen zweiter U-Schenkel (Kontaktlasche 76′) in die entsprechende Anschlußklemme (69′) für die Neutral-Verteilerleitung (5) ragt und
    - an dessen U-Basis (77) entgegen der Einsteckrichtung (9) eine Kontaktlasche (78) angeformt ist, die
        - mit einer weiteren Einsteköffnung (79) an der Oberseite (14) des Anschlußblockes (2) fluchtet und
        - in Einsteckstellung des Überstromschutzschalters (3) von dessen Signalausgangskontaktzunge (80) beaufschlagt ist.

28. Steckverbindungseinheit nach Anspruch 27,
    dadurch gekennzeichnet,
daß die Kontaktzunge (74) des Anschlußblokkes (2) für den Schutzanschluß den U-Schenkel eines weiteren in Einsteckrichtung U-förmigen Kontaktstückes (75) bildet, dessen zweiter U-Schenkel (Kontaktlasche 76) in der U-Ebene versetzt zum ersten U-Schenkel in die entsprechende Anschlußklemme (69) für die Schutzverteilerleitung ragt.

29. Steckverbindungseinheit nach Anspruch 27 oder 28,
    dadurch gekennzeichnet,
daß sich im Anschlußblock (2) ein weiteres Kontaktstück (75″) in Einsteckrichtung (9) erstreckt,

- dessen entgegen dieser Richtung weisendes Ende in Einsteckstellung des Überstromschutzschalters von dessen Phasenausgangskontaktzunge (81) beaufschlagt ist und
- dessen in Einsteckrichtung (9) weisendes Ende in die Anschlußklemme (69") für die Phasenverteilerleitung (5) ragt.

30. Steckverbindungseinheit nach einem der vorgenannten Ansprüche,

dadurch gekennzeichnet,

daß die Schutzsammelschiene (34) an ihren Freienden (35‴) jeweils eine rechtwinklig zur Einsteckrichtung liegende Ringerweiterung (Bund 45) trägt, die in Montageendstellung von einer mit einem in Einsteckrichtung (9) nach unten aus der Sockelleiste (1) austretenden Erdungsbolzen (48) verbundenen Nietbuchse (46) durchsetzt ist.

**Claims**

1. Multiple plug connection unit for the supply of electricity to one or more parallel consumer units, particularly in telephone installations,
    - having, in a base strip (1) of an insulating material, bus-bars (31, 33, 34) arranged parallel to one another for phase, neutral and earth connection, and
    - having in each case one overload contact-breaker (3) which can be inserted between each consumer unit and the phase bus-bar (31),

   the consumer unit or consumer units being each connected via distributor leads (5) for phase, neutral and earth connection, which leads can be electrically connected to the particular bus-bars (31, 33, 34) by means of the multiple plug connection unit, characterized by the following features:

   a) the bus-bars (31, 33, 34) are enclosed on all sides by the casing (17) of the base strip (1) and are accessible by means of insertion openings (12, 12', 12", 12'"), for contact prongs (13), the openings being arranged in a casing wall and each opening being substantially aligned with the bus-bars (31, 33, 34);

   b) the distributor lead connections for each particular consumer unit are combined in a separate connection block (2) in each case;

   c) the connection blocks (2) can be placed one after the other along the base strip (1), making direct contact with the neutral (33) and earth (34) bus-bars; and

   d) the overload contact-breakers (3) can be placed on the casing (17) of the base strip (1), making contact with the phase bus-bar (31) and, when placed in position, each simultaneously makes contact with the phase connections of the connection blocks (2), which are enclosed between the base strip (1) and the overload contact-breaker (3).

2. Plug connection unit according to Claim 1, characterized in that the base strip (1) and the connection blocks (2) exhibit a step-shaped recess, mutually matching in cross-section, in their side wall regions which face towards one another when they are placed in position.

3. Plug connection unit according to Claim 2, characterized in that when placed in position, the base strip (1) and the connection blocks (2) form an assembly unit with a substantially rectangular cross-section whose mutual contact surfaces (7, 8) are formed by the recessing as stepped surfaces extending between the lower surface (47) and the upper surface (10, 14) of the assembly unit.

4. Plug connection unit according to one of the preceding claims, characterized in that the insertion openings (12, 12', 12", 12'") in the base strip (1) are located on its upper surface (10) and stepped partial surface (11) pointing against the insertion direction (9) of the connection blocks (2).

5. Plug connection unit according to one of the preceding claims, characterized in that the connection blocks (2) are each provided, in the region of their stepped partial surface (73) pointing downwards, with two contact prongs (74, 74') extending in the insertion direction (9) for making contact between the neutral and earth distributor leads and the neutral bus-bar (33) and the earth bus-bar (34) of the base strip (1).

6. Plug connection unit according to Claim 5, characterized in that the connection blocks (2) are each provided, on their surface (14) pointing against the insertion direction (9), with at least one insertion opening (79, 79') through which a contact prong can be introduced to make contact with the phase distributor lead (5).

7. Plug connection unit according to one of the preceding claims, characterized in that the overload contact-breakers (3) can be inserted by means of their contact prongs (40, 42, 80, 81), each extending from their lower surface in the insertion direction in the insertion openings (12, 12', 79, 79'), on the substantially plane upper surface (10, 14) of the assembly unit consisting of the base strip (1) and the connection blocks (2).

8. Plug connection unit according to one of the preceding claims, characterized in that the connection blocks (2), by means of their casing, (66) enclose internal clamps (69, 69', 69") which are used for the connection of the distributor leads (5) which can be led in by means of lead-in openings (68) arranged in the lower surface (67) of the connection blocks (2).

9. Plug connection unit according to Claim 8, characterized in that the clamps (69, 69', 69") can be contacted by means of the two contact prongs (74, 74'), arranged in the insertion direction (9), of the connection block (2) and by means of an insertable contact prong (80, 81) of the overload contact-breaker (3).

10. Plug connection unit according to one of Claims 3 to 9, characterized in that each connection block (2) can be fixed on the base strip (1) by means of a fixing screw (83) extending in the insertion direction (9) and axially located on the connection block (2) in the region of a stepped partial surface (73), each of which fixing screws (83) engages by means of its free end (87) in one of the nuts (86) or threaded sleeves arranged in a row in the region of the stepped partial surface (11) of the base strip (1) and rotationally fixed in the casing (17).

11. Plug connection unit according to Claim 10, characterized in that each of the heads (89) of the fixing screws (83) is accessible from the upper surface (14) of the connection blocks (2).

12. Plug connection units according to one of the preceding claims, characterized in that the bus-bars (31, 32, 33, 34) are designed as integral, punched and/or cold-worked, strip-type shaped metal parts.

13. Plug connection unit according to Claim 12, characterized in that contact tabs (38, 38', 38", 38'") are formed integrally on the bus-bars (31, 32, 33, 34), pointing against the insertion direction and in line in the installed position with the insertion openings (12, 12', 12", 12'"), which contact tabs are subjected to the contact prongs (13) of the connection block (2) and overload contact-breakers (3) when the connection blocks (2) and overload contact-breakers (3) are placed in position.

14. Plug connection unit according to Claim 13, characterized in that the contact prongs (13) of the connection blocks (2) and the overload contact-breakers (3) and the contact tabs (38, 38', 38", 38'") are surrounded by contact pressure springs (41) in order to increase the contact pressure when the connection blocks (2) and overload contact-breakers (3) are placed in position.

15. Plug connection unit according to one of Claims 12 to 14, characterized in that contact struts (36, 36', 36") are integrally formed on the free ends (35, 35', 35" ) of the bus-bars (31, 32, 33) and extend in the longitudinal direction of the latter.

16. Plug connection unit according to one of Claims 12 to 15, charcterized in that each of the end surfaces (15, 16) of the base strip (1) enters a connection box (18, 19) in which the connection clamps (20, 21, 22) for the bus-bars (31, 32, 33) are located so as to be covered over from the outside.

17. Plug connection unit according to Claims 15 and 16, characterized in that the contact struts (36, 36', 36") of the bus-bars (31, 32, 33) engage by means of their free ends (35, 35', 35") in the connection clamps (20, 21, 22) in the connection boxes (18, 19).

18. Plug connection unit according to Claim 16 or 17, characterized in that the clamping screws (23) of the connection clamps (20, 21, 22) located adjacent to one another in the transverse direction are accessible from above by means of access openings (24) inserted in the top wall (25) of the connection boxes (18, 19).

19. Plug connection unit according to Claim 18, characterized in that the access openings (24) can be closed by means of a cover (65).

20. Plug connect ion unit according to one of Claims 16 to 19, characterized in that one of the two connection boxes (18) has, as the main connection, lead-in openings (26) in its end surface, which are aligned with the connection clamps (20, 21, 22), through which the main supply leads for the connection of the phase bus-bar (31) and the neutral bus-bar (33) enter the base strip (1).

**21.** Plug connection unit according to one of Claims 16 to 20, characterized in that connecting pins (49, 49') manufactured from metallic material and in contact, one with the phase bus-bar (31) and one with the neutral bus-bar (33), are mounted on the end surface of the base strip (1) opposite the main connection so that they can be axially displaced in the longitudinal direction, each of which connection pins (49, 49')
- is enclosed by the casing (17) of the base strip (1) in the inactive position and
- in the active position, in which it is pushed out endways from the casing (17) of the base strip (1), it can be inserted by means of its external free end (50, 50') in the corresponding insertion openings (26) for the connection of the phase bus-bar (31) and the neutral bus-bar (33) of a second base strip (1') located in series with the first base strip (1) in the longitudinal direction and it can be connected to the to correspond (sic) connection clamps (20, 22).

**22.** Plug connection unit according to Claim 21, characterized in that each of the connection pins (49, 49') penetrate through the connection clamps (20', 22') for the contact struts (36, 36') on the end surface opposite the main connection.

**23.** Plug connection unit according to Claim 21 or 22, characterized in that each connection pin (49, 49') is surrounded by a spring-loaded, longitudinally telescoping telescopic sleeve (57) on its free connection length between the two base strips, which telescopic sleeve (57) is fastened by means of its fastening end (engagement end 59) to the end surface of the base strip casing (17) opposite the main connection.

**24.** Plug connection unit according to one of Claims 21 to 23, characterized in that each connection pin (49, 49') is provided on its inner end (53, 53') with a rectangular pusher pin (54, 54') protruding upwards and manufactured from insulating material.

**25.** Plug connection unit according to Claim 24, characterized in that the pusher pin (54, 54') penetrates with its free end through a guide slot (55, 55') located in the upper surface (10) of the base strip (1) and extending in the longitudinal direction.

**26.** Plug connection unit according to one of the preceding claims, characterized in that a signal bus-bar (32) is fitted in the base strip (1) and parallel to the phase bus-bar (31), the neutral bus-bar (33) and the earth bus-bar (34), which signal bus-bar (32) can be connected by means of the signal contact connections (42, 80) of the overload contact-breaker (3) to the neutral connection (69') in the connection block (2) for the purpose of monitoring the overload contact-breaker (3).

**27.** Plug connection unit according to Claim 26, characterized in that the contact prong (74') of the connection block (2) forms, for the neutral connection, the U-leg of a U-shaped contact piece (75') open in the insertion direction (9),
- whose second U-leg (contact tab 76') protrudes into the corresponding contact clamp (69') for the neutral distributor lead (5) and
- on whose U-base (77) a contact tab (78) is formed against the insertion direction (9), which contact tab (78)
- is aligned with a further insertion opening (79) on the upper surface (14) of the connection block (2) and
- is subjected to the signal output contact prong (80) of the overload contact-breaker (3) in the inserted position of the latter.

**28.** Plug connection unit according to Claim 27, characterized in that the contact prong (74) of the connection block (2) forms, for the earth connection, the U-leg of a further contact piece (75), U-shaped in the insertion direction, the second U-leg (contact tab 76) of the contact piece (75) protudes, offset to the first U-leg in the U-plane, into the corresponding connection clamp (69) for the earth distributor lead.

**29.** Plug connection unit according to Claim 27 or 28, characterized in that in the connection block (2), a further contact piece (75") extends in the insertion direction (9),
- whose end pointing against this direction is subjected to the phase output contact prong (81) of the overload contact-breaker in the inserted position of the latter, and
- whose end pointing in the insertion direction (9) protudes into the connection clamp (69") for the phase distributor lead (5).

**30.** Plug connection unit according to one of the preceding claims, characterized in that the earth bus-bar (34) carries a ring extension (collar 45), located at right angles to the insertion direction, on each of its free ends (35'''), which ring extension is pentrated, in the final assembled position, by a riveted bush (46) connected to an earth pin (48) emerging downwards in the insertion direction (9) from the base strip (1).

**Revendications**

1. Connecteur enfichable multiple, destiné à l'alimentation en courant d'un ou de plusieurs consommateurs connectés en parallèle, en particulier, dans des systèmes de télécommunication, et muni
   - de barres collectrices (31,33,34) pour des raccords de phase, du neutre et de sécurité, disposées parallèlement les unes aux autres dans un profilé de support (1) fait d'une matière isolatrice, et
   - chaque fois d'un disjoncteur à maximum de courant (3), susceptible d'être connecté entre ladite barre collectrice pour le raccord de phase (31) et le consommateur en question,
   - le ou les consommateurs étant, dans chaque cas, raccordés par l'entremise de conducteurs distributeurs (5) pour les raccords de phase, du neutre et de sécurité, et susceptibles d'être raccordés électriquement aux barres collectrices correspondantes (31,33,34) au moyen du connecteur enfichable multiple,
   caractérisé par les caractéristiques suivantes :
   a) les barres collectrices (31,33,34) sont entourées, tout autour, du boîtier (17) du profilé de support (1) et sont accessibles par des ouvertures d'enfichage (12,12',12'',12''') prévues dans une paroi de boîtier, pratiquement alignées sur les barres collectrices (31,33,34) à des languettes de contact (13);
   b) les raccords des conducteurs distributeurs pour chaque consommateur sont rassemblés chaque fois dans un bloc de raccord (2) séparé;
   c) les blocs de raccord (2) sont, avec formation de contact direct avec la barre collectrice du neutre (33) et avec celle de sécurité (34) susceptibles d'être montés sur le profilé de support (1) mutuellement alignés le long de ce profilé sur ce dernier; et
   d) les disjoncteurs à maximum de courant (3) sont susceptibles d'être montés sur le boîtier (17) du profilé de support (1) en faisant contact avec la barre collectrice de phase (31) et contactent, chaque fois, dans leur position montée, simultanément les raccords de phase des blocs de raccord (2) intercalés entre le profilé de support (1) et le disjoncteur à maximum de courant (3).

2. Connecteur enfichable selon la revendication 1, caractérisé en ce que le profilé de support (1) et les blocs de raccord (2) accusent, en coupe transversale, au niveau de zones de leurs parois latérales, qui se regardent en leur position montée, des gorges étagées, mutuellement correspondantes.

3. Connecteur enfichable selon la revendication 2, caractérisé en ce que le profilé de support (1) et les blocs de raccord (2) forment, en leur position montée, un ensemble de montage à section transversale pratiquement rectangulaire, dont les faces d'application réciproques (7,8) forment, par les gorges, des plans étagés s'étendant entre le côté inférieur (47) et le côté supérieur (10,15) de l'ensemble de montage.

4. Connecteur enfichable selon l'une ou l'autre des revendications précédentes, caractérisé en ce que les ouvertures d'enfichage (12,12',12'',12''') du profilé de support (1) se trouvent dans le côté supérieur (10) ou des plans étagés (11) regardant dans le sens opposé au sens d'enfichage (9) des blocs de raccord (2).

5. Connecteur enfichable selon l'une ou l'autre des revendications précédentes, caractérisé en ce que les blocs de raccord (2) sont, au niveau de leurs faces étagées (73) regardant vers le bas, munis chacun de deux languettes de contact (74,74') orientées dans le sens d'enfichage pour la mise en contact des conducteurs du neutre et de sécurité avec la barre collectrice du neutre (33) et celle de sécurité (34) du profilé de support (1).

6. Connecteur enfichable selon la revendication 5, caractérisé en ce que les blocs de raccord (2) sont, sur leurs faces (14) regardant dans le sens opposé au sens d'enfichage (9), munis chacun d'au moins une ouverture d'enfichage (79,79') par laquelle une languette de contact pour la mise en connection du conducteur de distribution de phase (5) peut être introduite.

7. Connecteur enfichable selon l'une ou l'autre des revendications précédentes, caractérisé en ce que le disjoncteur à maximum de courant (3) est susceptible de s'enficher avec ses languettes de contact (40,42,80,81), orientées chacune à partir de leur face inférieure dans le sens d'enfichage, dans les ouvertures d'enfichage (12,12',79,79') situées à la face supérieure pratiquement plane (10,14) de l'ensemble de montage composé du profilé de support (1) et des blocs de raccord (2).

8. Connecteur enfichable selon l'une ou l'autre des revendications précédentes, caractérisé en ce que les blocs de raccord (2) entourent avec leur boîtier (66) des bornes intérieures (69,69',69"),servant au raccord des conducteurs distributeurs (5), susceptibles d'être insérés par les ouvertures (68) prévues dans la face inférieure (67) des blocs de raccord (2).

9. Connecteur enfichable selon la revendication 8, caractérisé en ce que les bornes (69,69',69") peuvent être contactées au moyen des deux languettes de contact (74,74') du bloc de raccord (2), orientées dans le sens d'enfichage (9), ou d'une languette de contact enfichable (80,81) du disjoncteur à maximum de courant (3).

10. Connecteur enfichable selon l'une ou l'autre des revendications 3 à 9,caractérisé en ce que chaque bloc de raccord (2) peut être fixé au profilé de support (1) au moyen d'une vis de fixation (83), orientée dans le sens d'enfichage (9) et immobilisée axialement au bloc de raccord (2) au niveau d'un des plans étagés (73), vis dont le bout libre s'engage chaque fois dans un des écrous (86) ou douilles taraudées, disposés en série, sans possibilité de rotation, dans le boîtier (17) au niveau des plans étagés (11) du profilé de support (1).

11. Connecteur enfichable selon la revendication 10, caractérisé en ce que les têtes (89) des vis de fixation (83) sont toutes accessibles à partir du côté supérieur (14) des blocs de raccord (2).

12. Connecteur enfichable selon l'une ou l'autre des revendications précédentes, caractérisé en ce que les barres collectrices (31,32,33,34) sont des parties métalliques en forme d'une bande métallique façonnées en une pièce par estampage et/ou par déformation à froid.

13. Connecteur enfichable selon la revendication 12, caractérisé en ce que des lamelles de contact (38,38',38",38"'), s'alignant en position montée sur les ouvertures d'enfichage (12,12',12",12"'), à l'encontre du sens d'enfichage, sont formées en une pièce avec les barres collectrices (31,32,33,34), lamelles de contact qui, en la position montée des blocs de raccord (2) ou des disjoncteurs à maximum de courant (3), sont sollicitées par les languettes de contact (13) de ces derniers.

14. Connecteur enfichable selon la revendication 13, caractérisé en ce que, pour augmenter la pression de contact des blocs de raccord (2) ou des disjoncteurs à maximum de courant (3) en position montée, leurs languettes de contact (13) et les lamelles de contact (38,38',38",38"') sont enserrées par des ressorts à pression de contact (41).

15. Connecteur enfichable selon l'une ou l'autre des revendications 12 à 14, caractérisé en ce que les bouts libres (35,35',35") des barres collectrices (31,32, 33) sont munis d'éléments de contact longitudinaux (36, 36',36") formant une pièce avec eux.

16. Connecteur enfichable selon l'une ou l'autre des revendications 12 à 15, caractérisé en ce que chacune des extrémités frontales (15,16) du profilé de support (1) débouche dans une boîte de connexion (18,19) dans laquelle les bornes de raccord (20,21,22) pour les barres collectrices (31,32,33) sont logées, recouvertes du côté extérieur.

17. Connecteur enfichable selon les revendications 15 et 16, caractérisé en ce que les éléments de contact (36,36',36") des barres collectrices (31,32,33) prennent avec leurs bouts libres (35,35',35") dans les bornes de raccord (20,21,22) à l'intérieur des boîtes de connexion (18,19).

18. Connecteur enfichable selon la revendication 16 ou 17, caractérisé en ce que les vis de serrage (23) des bornes transversalement juxtaposées (20,21,22) sont accessibles par le haut par des ouvertures d'accès (24) prévues dans la paroi de couverture (25) des boîtes de connexion (18,19).

19. Connecteur enfichable selon la revendication 18, caractérisé en ce que les ouvertures d'accès (24) peuvent être fermées au moyen d'un couvercle (65).

20. Connecteur enfichable selon l'une ou l'autre des revendications 16 à 19, caractérisé en ce que l'une des deux boîtes de connexion (18) présente, à titre de dispositif de connexion principal, dans sa face frontale des ouvertures d'entrée (26) alignées sur les bornes de raccord (20,21,22), par lesquelles entrent les lignes d'alimentation principales pour le raccord des barres collectrices de phase (31) et du neutre (33) dans le profilé de support (1).

21. Connecteur enfichable selon l'une ou l'autre des revendications 16 à 20, caractérisé en ce que le côté frontal du profilé de support (1) faisant face au raccord principal, porte chaque fois un boulon de liaison en matière métallique (49,49'), connecté à la barre collectrice de phase (31) ou à la barre collectrice du neutre (33) et susceptible de coulisser parallèlement à l'axe longitudinal, boulon de liaison qui,
    - en sa position de repos, est entouré par le boîtier (17) du profilé de support (1), et
    - en sa position active, située à l'extérieur de la face frontale du boîtier (17) du profilé de support (1), est susceptible d'être inséré avec son bout extérieur libre (50,50') dans les ouvertures d'introduction (26) correspondantes pour le raccord des barres collectrices de phase (31) et du neutre (33) d'un deuxième profilé de support (1') accouplé longitudinalement au premier profilé de support (1) et susceptible d'être raccordé aux bornes correspondantes (20,22).

22. Connecteur enfichable selon la revendication 21, caractérisé en ce que les boulons de liaison (49,49') traversent chacun les bornes de raccord (20',22') pour les éléments de contact (36,36") à la face frontale opposée au raccord principal.

23. Connecteur enfichable selon la revendication 21 ou 22, caractérisé en ce que chaque boulon de liaison (49,49') est, sur sa longueur de liaison libre entre les deux profilés de support (1,1'), entouré d'une douille télescopique (57), susceptible de coulisser en soi et sollicitée longitudinalement par un ressort, laquelle est, à son bout de fixation (bout de repos 59), fixée au côté frontal du boîtier du profilé de support (17), qui fait face au raccord principal.

24. Connecteur enfichable selon l'une ou l'autre des revendications 21 à 23, caractérisé en ce que chaque boulon de liaison (49,49') est, à son bout intérieur (53,53'), muni d'une broche coulissante (54,54'), faite d'une matière isolatrice et orientée à angle droit vers le haut.

25. Connecteur enfichable selon la revendication 24, caractérisé en ce que la broche coulissante (54,54') passe avec son bout libre par une fente longitudinale (55,55') de la face supérieure (10) du profilé de support (1).

26. Connecteur enfichable selon l'une ou l'autre des revendications précédentes, caractérisé en ce que dans le profilé de support (1) est disposée une barre collectrice de signaux (32), parallèle aux barres collectrices de phase (31), du neutre (33) et de sécurité (34) et susceptible d'être connectée, par l'entremise des contacts de signalisation (42,80) du disjoncteur à maximum de courant (3), au raccord neutre (69') dans le bloc de raccord (2) en vue du contrôle du disjoncteur.

27. Connecteur enfichable selon la revendication 26, caractérisé en ce que la languette de contact (74') du bloc de raccord (2), pour le raccord du neutre, forme l'un des bras d'une pièce de contact en U (75') ouverte dans le sens d'enfichage (9),
    - dont le deuxième bras (lamelle de contact 76') pénètre dans la borne de contact correspondante (69') pour le conducteur distributeur neutre (5), et
    - pièce en U avec la base de laquelle est solidaire une lamelle de contact (78), orientée dans le sens opposé au sens d'enfichage (9),
        - alignée sur une deuxième ouverture d'enfichage (79) prévue dans la face supérieure (14) du bloc de raccord (2), et
        - sollicitée par la languette de contact de la sortie de signalisation (80) du disjoncteur à maximum de courant (3) mis en sa position enfichée.

28. Connecteur enfichable selon la revendication 27, caractérisé en ce que la languette de contact (74) du bloc de raccord (2) pour le raccord de sécurité forme l'un des bras d'une autre pièce de contact en U (75) dans le sens d'enfichage, dont le deuxième bras (lamelle de contact 76), décalé par rapport au premier bras dans le plan de la pièce en U, pénètre dans la borne de raccord correspondante (69) pour le conducteur distributeur de sécurité.

29. Connecteur enfichable selon la revendication 27 ou 28, caractérisé en ce que dans le bloc de raccord (2) s'étend une autre pièce de contact (75") dans le sens d'enfichage (9),
    - dont le bout, orienté dans le sens opposé à ce sens, est sollicité par la languette de contact de la sortie de phase (81) dans la position enfichée du disjoncteur à maximum de courant et

    - dont le bout orienté dans le sens d'enfichage (9), pénètre dans la borne de raccord (69") pour le conducteur distributeur de phase (5).

30. Connecteur enfichable selon l'une ou l'autre des revendications précédentes, caractérisé en ce que la barre collectrice de sécurité (34) présente, à chacune de ses extrémités libres (35'''), un élargissement annulaire (bande 45) perpendiculaire au sens d'enfichage, par lequel passe, dans la position de montage, un rivet tubulaire (46), auquel est fixé un boulon de mise à la masse (48), sortant vers le bas du profilé de support (1) dans le sens d'enfichage (9).

FIG.1

FIG.2

FIG.3

EP 0 252 512 B1

# FIG.4

FIG.5

FIG.6

FIG. 7

FIG.8